# EUROPEAN PATENT APPLICATION

(11) **EP 4 691 851 A1**
(43) Date of publication of application: **11.02.2026**
(21) Application number: 24779983.6
(22) Date of filing: 22.03.2024
(51) Int. Cl.: B60Q 1/14

(54) **VEHICLE HEADLIGHT**

(30) Priority: 29.03.2023 JP 2023054313; 29.03.2023 JP 2023054314
(71) Applicant: Koito Manufacturing Co., Ltd., Shinagawa-ku, Tokyo 141-0001 (JP)
(72) Inventor: SHIBATA Yuichi, Shizuoka-shi, Shizuoka 424-8764 (JP)
(74) Representative: Hoffmann Eitle
(86) International application number: PCT/JP2024/011326
(87) International publication number: WO 2024/203865

(57) **Abstract**

A vehicle headlight (1) includes a lamp unit (2) and a control unit (3). In a case where a road surface (RO) is in a snow-accumulated state in which snow is compacted and a state of the presence or absence of snowfall is a snow-falling state, the control unit (3) brings the lamp unit (2) into a first dimming state in which intensity of light of a lower center region (HB_{L}) and an upper center region (HB_{H}) of a center region (HB_{c}) of a high beam portion (HB) in a left-right direction is reduced.

## Description

### Technical Field

The present invention relates to a vehicle headlight.

### Background Art

A vehicle headlight capable of improving visibility in front of a vehicle when snow has fallen is known. Patent Literature 1 below describes such a vehicle headlight. In this vehicle headlight, it is detected that the vehicle is in a snow-falling state, and in a case where the vehicle is in a snow-falling state, the luminance of One vehicle headlight 1 is disposed on the left side of the front part of the host vehicle 100, and the other vehicle headlight 1 is disposed on the right side of the front part of the host vehicle 100.
the low beam is reduced. As a result, it is possible to prevent the driver of the host vehicle from being dazzled by the scattered light of the low beam light due to the snow particles.

[Patent Literature 1] JP 2012-51488 A

### Summary of Invention

In Patent Literature 1 described above, dazzling of the driver of the host vehicle is suppressed by adjusting the luminance of the low beam. However, no consideration has been given to dazzling of the driver of the host vehicle due to the occurrence of the light veil in a case where the road surface is in a snow-accumulated state in which snow is compacted.

Therefore, an object of the present invention is to provide a vehicle headlight capable of suppressing dazzling of a driver of a host vehicle due to the occurrence of the light veil when the host vehicle travels on a road surface in a snow-accumulated state in which snow is compacted.

In order to achieve the above object, a first aspect of a vehicle headlight of the present invention includes a lamp unit including a low beam lamp unit that emits light of a low beam and a high beam lamp unit that emits light of a high beam portion that forms a high beam, the high beam being formed by adding the light of the high beam portion to the low beam, and a control unit that receives road surface information output by a road surface state detection device that detects a state of a road surface and snowfall information output by a snowfall detection device that detects a state of presence or absence of snowfall, and controls the lamp unit, wherein in a case where the road surface is in a snow-accumulated state in which snow is compacted and the state of the presence or absence of snowfall is a snow-falling state, the control unit brings the lamp unit into a first dimming state in which intensity of light in a lower center region that is a lower region of a center region of the high beam portion in a left-right direction and an upper center region that is an upper region of the center region is reduced.

In a case where the road surface is in a snow-accumulated state in which snow is compacted, the road surface is likely to reflect light. In the case of the snow-falling state, in a case where the lower light of the high beam portion is reflected by the road surface in the snow-accumulated state in which snow is compacted, the reflected light is further reflected by the snow particles during the snowfall, and the light veil may be generated. However, in the vehicle headlight of the present invention, as described above, the control unit brings the lamp unit into the first dimming state. That is, in the snow-falling state, by decreasing the intensity of light in the lower center region, the intensity of light of the high beam portion with which the road surface is irradiated can be decreased, and the intensity of light reflected by the road surface and further reflected by the snow particles during the snowfall can be decreased. As a result, it is possible to suppress the occurrence of the light veil caused by the light reflected on the road surface. In addition, in the snow-falling state, by reducing the intensity of light in the upper center region, it is possible to reduce the intensity of light of a high beam portion directly with which snow particles are irradiated during the snowfall. As a result, the intensity of light reflected by the snow particles can be reduced, and the occurrence of the light veil can be suppressed. Therefore, according to the vehicle headlight of the present invention, it is possible to suppress dazzling of the driver of the host vehicle due to the occurrence of the light veil at the time of snowfall while traveling on a road surface in a snow-accumulated state in which snow is compacted.

In addition, in the first aspect, it is preferable that the control unit brings the lamp unit into a second dimming state in which the intensity of light in the lower center region and the upper center region is reduced in a case where the road surface is in a snow-accumulated state in which no snow is compacted and the state of the presence or absence of snowfall is a snow-falling state.

Even in a snow-accumulated state in which no snow is compacted such as new snow, the road surface reflects light. For this reason, even when no snow is compacted, in a case of the snow-falling state, the light veil may be generated due to the light of the high beam portion reflected on the road surface. However, in the vehicle headlight, by bringing the lamp unit into the second dimming state as described above, it is possible to suppress the occurrence of the light veil and to suppress dazzling of the driver of the host vehicle even in a case of a snow-accumulated state in which no snow is compacted.

In this case, it is preferable that the intensity of light in the lower center region in the first dimming state is smaller than the intensity of light in the lower center region in the second dimming state.

Since light tends to be scattered by snow particles near the snow surface without reaching the inside of snow with higher density, the reflectance of the road surface tends to be higher in a snow-accumulated state in which snow is compacted than in a snow-accumulated state in which no snow is compacted. Therefore, since the intensity of light in the lower center region in the first dimming state is smaller than the intensity of light in the lower center region in the second dimming state, it is possible to reduce the difference in the intensity of light reflected on the road surface between the first dimming state and the second dimming state, it is possible to reduce the difference in the degree of scattering of the light due to the snow particles, and it is possible to suppress the uncomfortable feeling of the driver of the host vehicle.

Furthermore, in the first aspect, it is preferable that the control unit further receives another vehicle information output by another vehicle detection device that detects another vehicle, and the control unit brings the lamp unit into the first dimming state in a case where the road surface is in a snow-accumulated state in which snow is compacted, the state of the presence or absence of snowfall is a non-snow-falling state, and the another vehicle is a preceding vehicle traveling in front of a host vehicle. Furthermore, it is preferable that the control unit further receives another vehicle information output by another vehicle detection device that detects another vehicle, and in a case where the road surface is in a snow-accumulated state in which snow is compacted, the state of the presence or absence of snowfall is a non-snow-falling state, and the another vehicle is an oncoming vehicle, the control unit brings the lamp unit into the first dimming state for a first predetermined period after the oncoming vehicle and a host vehicle pass each other.

When a vehicle travels on a road surface in a snow-accumulated state in which snow is compacted, snow remaining on the road surface tends to be whirled up by the vehicle. In addition, the road surface in a snow-accumulated state in which snow is compacted is likely to reflect light. For this reason, when the lower light of the high beam portion is reflected by the road surface on which snow is compacted, the reflected light is further reflected by the snow particles that another vehicle whirls up, and the light veil may be generated. In addition, when the snow particles whirled up by another vehicle are irradiated with light of a high beam portion, the light veil may be generated by light reflected by the snow particles. In the above-described vehicle headlight, the intensity of light in the lower center region and the upper center region of the high beam portion is reduced in a case where the preceding vehicle is traveling or for a first predetermined period after the oncoming vehicle and the host vehicle pass each other. By reducing the intensity of light of the high beam portion with which the road surface is irradiated in this manner, the intensity of light reflected by the road surface and further reflected by the snow particles whirled up by another vehicle can be reduced. In addition, by reducing the intensity of light of a high beam portion with which snow particles whirled up by another vehicle are directly irradiated, the intensity of light reflected by the snow particles can be reduced. As a result, the occurrence of the light veil can be suppressed. Therefore, even at the time of non-snowfall, it is possible to suppress dazzling of the driver of the host vehicle due to the occurrence of the light veil.

In the first aspect, it is preferable that in a case where another vehicle information is input to the control unit as described above, the control unit brings the lamp unit into a second dimming state in which the intensity of light in the lower center region and the upper center region is reduced in a case where the road surface is in a snow-accumulated state in which no snow is compacted, the state of the presence or absence of snowfall is a non-snow-falling state, and the another vehicle is a preceding vehicle traveling in front of the host vehicle. Similarly, it is preferable that in a case where the road surface is in a snow-accumulated state in which no snow is compacted, the state of the presence or absence of snowfall is a non-snow-falling state, and the another vehicle is an oncoming vehicle, the control unit brings the lamp unit into a second dimming state in which intensity of light in the lower center region and the upper center region is reduced for a second predetermined period after the oncoming vehicle and the host vehicle pass each other.

Even when no snow is compacted, there is a case where snow on the surface layer is whirled up by the vehicle. For this reason, even when no snow is compacted, light of a high beam portion is reflected by a road surface in a snow-accumulated state in which no snow is compacted, the reflected light is reflected by snow particles whirled up, and light veil may be generated. However, by bringing the lamp unit into the second dimming state as described above, it is possible to suppress the occurrence of the light veil even in a snow-accumulated state in which no snow is compacted at the time of non-snowfall, and to suppress dazzling of the driver of the host vehicle.

In addition, it is preferable that even in the case of the non-snow-falling state, as in the snow-falling state, the intensity of light in the lower center region in the first dimming state is smaller than the intensity of light in the lower center region in the second dimming state for the same reason.

In addition, it is preferable that in the case of the non-snow-falling state, intensity of light of the upper center region in the first dimming state is smaller than intensity of light of the upper center region in the second dimming state.

The snow remaining on the road surface on which snow is compacted tends to be more easily whirled up by the vehicle than the snow on the surface layer on which no snow is compacted. Therefore, as described above, since the intensity of light in the upper center region in the first dimming state is smaller than the intensity of light in the upper center region in the second dimming state, it is possible to reduce the intensity of light with which the snow particles whirled up are irradiated in the case of the snow-accumulated state in which snow is compacted, as compared with the case of the snow-accumulated state in which no snow is compacted, it is possible to reduce the difference in the degree of scattering of light due to the snow particles between the first dimming state and the second dimming state, and it is possible to suppress the uncomfortable feeling of the driver of the host vehicle.

In order to achieve the above object, a second aspect of a vehicle headlight of the present invention includes a lamp unit including a low beam lamp unit that emits light of a low beam, and a high beam lamp unit that emits light of a high beam portion that forms a high beam, the high beam being formed by adding the light of the high beam portion to the low beam, and a control unit that receives road surface information output by a road surface state detection device that detects a state of a road surface, snowfall information output by a snowfall detection device that detects a state of presence or absence of snowfall, and another vehicle information output by another vehicle detection device that detects another vehicle, and controls the lamp unit, wherein in a case where the road surface is in a snow-accumulated state in which snow is compacted, the state of the presence or absence of snowfall is a non-snow-falling state, and the another vehicle is a preceding vehicle traveling in front of a host vehicle, the control unit brings the lamp unit into a first dimming state in which intensity of light in a lower center region that is a lower region of a center region of the high beam portion in a left-right direction and an upper center region that is an upper region of the center region is reduced.

In order to achieve the above object, a third aspect of a vehicle headlight of the present invention includes a lamp unit including a low beam lamp unit that emits light of a low beam, and a high beam lamp unit that emits light of a high beam portion that forms a high beam, the high beam being formed by adding the light of the high beam portion to the low beam, and a control unit that receives road surface information output by a road surface state detection device that detects a state of a road surface, snowfall information output by a snowfall detection device that detects a state of presence or absence of snowfall, and another vehicle information output by another vehicle detection device that detects another vehicle, and controls the lamp unit, wherein in a case where the road surface is in a snow-accumulated state in which snow is compacted, the state of the presence or absence of snowfall is a non-snow-falling state, and the another vehicle is an oncoming vehicle, the control unit brings the lamp unit into a first dimming state in which intensity of light in a lower center region that is a lower region of a center region of the high beam portion in a left-right direction and an upper center region that is an upper region of the center region is reduced for a first predetermined period after the oncoming vehicle and a host vehicle have passed each other.

As described above, when a vehicle travels on the road surface in a snow-accumulated state in which snow is compacted, snow remaining on the road surface tends to be whirled up by the vehicle. In addition, the road surface in a snow-accumulated state in which snow is compacted is likely to reflect light. For this reason, when the lower light of the high beam portion is reflected by the road surface on which snow is compacted, the reflected light is further reflected by the snow particles that another vehicle whirls up, and the light veil may be generated. In addition, when the snow particles whirled up by another vehicle are irradiated with light of a high beam portion, the light veil may be generated by light reflected by the snow particles. However, in the vehicle headlights according to the second and third aspects, the intensity of light in the lower center region and the upper center region of the high beam portion is reduced in a case where the preceding vehicle is traveling or for a first predetermined period after the oncoming vehicle and the host vehicle pass each other. Therefore, it is possible to reduce the intensity of light of the high beam portion with which the road surface is irradiated and to reduce the intensity of light reflected by the road surface and further reflected by the snow particles whirled up by another vehicle. In addition, it is possible to reduce the intensity of light of a high beam portion with which snow particles whirled up by another vehicle are directly irradiated and to reduce the intensity of light reflected by the snow particles. As a result, the occurrence of the light veil can be suppressed. Therefore, according to the vehicle headlights of the second and third aspects, it is possible to suppress dazzling of the driver of the host vehicle due to the occurrence of the light veil at the time of non-snowfall.

In addition, in the second and third aspects, it is preferable that the control unit brings the lamp unit into a second dimming state in which the intensity of light in the lower center region and the upper center region is reduced in a case where the road surface is in a snow-accumulated state in which no snow is compacted, the state of the presence or absence of snowfall is a non-snow-falling state, and the another vehicle is a preceding vehicle traveling in front of the host vehicle. Further, it is preferable that in a case where the road surface is in a snow-accumulated state in which no snow is compacted, the state of the presence or absence of snowfall is a non-snow-falling state, and the another vehicle is an oncoming vehicle, the control unit brings the lamp unit into a second dimming state in which intensity of light in the lower center region and the upper center region is reduced for a second predetermined period after the oncoming vehicle and the host vehicle pass each other.

Even in a snow-accumulated state in which no snow is compacted such as new snow, the road surface reflects light. In addition, even when no snow is compacted, there is a case where snow on the surface layer is whirled up by the vehicle. Therefore, even when no snow is compacted, the light veil may be generated due to light of a high beam portion. However, in the vehicle headlight, by bringing the lamp unit into the second dimming state as described above, it is possible to suppress the occurrence of the light veil and to suppress dazzling of the driver of the host vehicle even in a case of a snow-accumulated state in which no snow is compacted.

In the second and third aspects, it is preferable that the intensity of light of the lower center region in the first dimming state is smaller than the intensity of light of the lower center region in the second dimming state.

As described above, since light tends to be scattered by snow particles near the snow surface without reaching the inside as the density of snow is higher, a snow-accumulated state in which snow is compacted tends to have a higher reflectance than a snow-accumulated state in which no snow is compacted. Therefore, since the intensity of light in the lower center region in the first dimming state is smaller than the intensity of light in the lower center region in the second dimming state, it is possible to reduce the difference in the intensity of light reflected on the road surface, it is possible to reduce the difference in the degree of scattering of the light due to the snow particles, and it is possible to suppress the uncomfortable feeling of the driver of the host vehicle.

In the second and third aspects, it is preferable that the intensity of light in the upper center region in the first dimming state is smaller than the intensity of light in the upper center region in the second dimming state.

As described above, the snow remaining on the road surface on which snow is compacted tends to be more easily whirled up by the vehicle than the non-compacted snow. Therefore, since the intensity of light in the upper center region in the first dimming state is smaller than the intensity of light in the upper center region in the second dimming state, it is possible to reduce the intensity of light with which the snow particles whirled up are irradiated in the first dimming state, it is possible to reduce the difference in the degree of scattering of the light by the snow particles, and it is possible to suppress the uncomfortable feeling of the driver of the host vehicle.

In the first aspect to the third aspect, it is preferable that the first predetermined period is longer than the second predetermined period.

As described above, the snow remaining on the road surface in a snow-accumulated state in which snow is compacted tends to be more likely to be whirled up by the vehicle than the snow on the surface layer in a snow-accumulated state in which no snow is compacted. In addition, in a case where snow on a road surface is compacted, even when the snow whirled up falls on a road surface in a snow-accumulated state in which snow is compacted, the snow tends to be easily whirled up again, and a period during which snow is whirled up tends to be long. Therefore, since the first predetermined period is longer than the second predetermined period as described above, it is possible to suppress dazzling more appropriately after another vehicle and the host vehicle pass each other.

From the first aspect to the third aspect, it is preferable that the control unit decreases the intensity of light from the lower center region to the upper center region in the first dimming state.

In this case, in the high beam portion, the intensity of light in the entire region at the center in the left-right direction is reduced, the occurrence of the light veil can be further suppressed, and dazzling to the driver of the host vehicle can be further suppressed.

From the first aspect to the third aspect, it is preferable that the control unit reduce the intensity of light in the lower center region of the low beam in the left-right direction in the first dimming state.

In this case, the light reflected on the road surface can be further reduced, the occurrence of the light veil can be further suppressed, and the dazzling of the driver of the host vehicle can be further suppressed.

As described above, according to the present invention, it is possible to provide a vehicle headlight capable of suppressing dazzling of a driver of a host vehicle due to the occurrence of the light veil when the host vehicle travels on the road surface in a snow-accumulated state in which snow is compacted.

### Brief Description of Drawings

[FIG. 1] FIG. 1 is a schematic view illustrating a vehicle including a vehicle headlight in a first embodiment of the present invention.
[FIG. 2] FIG. 2 is a view illustrating a light distribution pattern.
[FIG. 3] FIG. 3 is a schematic front view of the high beam light source illustrated in FIG. 1.
[FIG. 4] FIG. 4 is a diagram for describing detection of a state of a road surface.
[FIG. 5] FIG. 5 is a diagram for describing detection of a state of presence or absence of snowfall.
[FIG. 6] FIG. 6 is a diagram for describing detection of another vehicle.
[FIG. 7] FIG. 7 is a flowchart illustrating an operation of a control unit in the first embodiment.
[FIG. 8] FIG. 8 is a view illustrating a light distribution pattern in a dimming state.
[FIG. 9] FIG. 9 is a flowchart illustrating an operation of a control unit in a second embodiment.
[FIG. 10] FIG. 10 is a flowchart illustrating an operation of a control unit in a third embodiment.
[FIG. 11] FIG. 11 is a view illustrating a second modification of the light distribution pattern in the dimming state.

### Description of Embodiments

Hereinafter, a preferred embodiment of a vehicle headlight according to the present invention will be described in detail with reference to the drawings. The embodiments exemplified below are intended to facilitate understanding of the present invention and are not intended to limit the present invention. The present invention can be modified and improved without departing from the gist thereof. In the drawings referred to below, dimensions of each member may be changed for easy understanding.

### (First Embodiment)

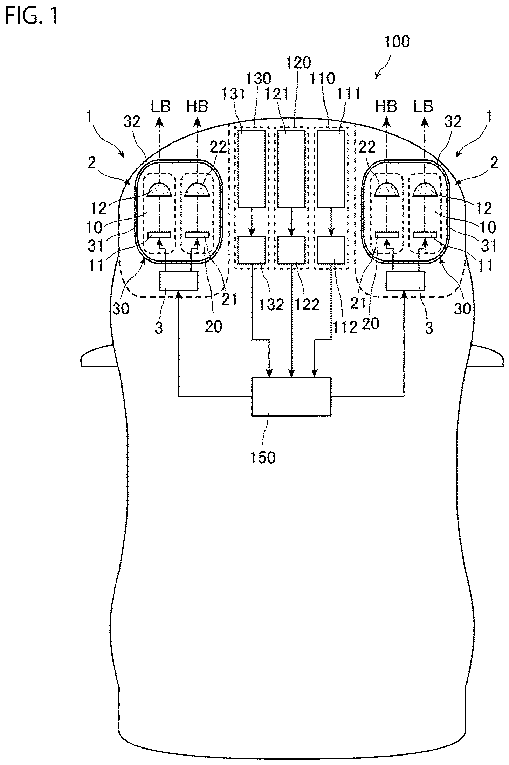

FIG. 1 is a schematic view illustrating a host vehicle including a vehicle headlight of the present embodiment. As illustrated in FIG. 1, a host vehicle 100 includes a pair of left and right vehicle headlights 1, a road surface state detection device 110, a snowfall detection device 120, another vehicle detection device 130, and an electronic control unit (ECU) 150. In the present specification, "right" means the right side of the host vehicle 100 in the forward direction, and "left" means the left side in the forward direction. The host vehicle 100 of the present embodiment is an automobile. However, the host vehicle 100 is not limited to an automobile, and may be, for example, a motorcycle.

Each vehicle headlight 1 includes a lamp unit 2 and a control unit 3. One vehicle headlight 1 is disposed on the left side of the front part of the host vehicle 100, and the other vehicle headlight 1 is disposed on the right side of the front part. The configuration of one vehicle headlight 1 is substantially the same as the configuration of the other vehicle headlight 1, and is substantially bilaterally symmetrical with the configuration of the other vehicle headlight 1. Therefore, one vehicle headlight 1 will be described below, and the description of the other vehicle headlight 1 will be omitted.

The lamp unit 2 includes a casing 30, a low beam lamp unit 10, and a high beam lamp unit 20. The light emitted from the lamp unit 2 is mainly low beam light and high beam light.

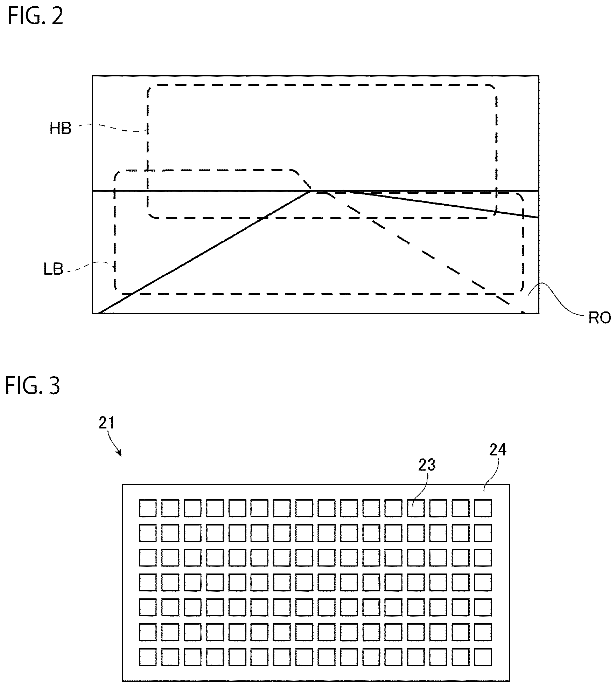

FIG. 2 is a diagram illustrating a light distribution pattern of light emitted from the vehicle headlight 1. As illustrated in FIG. 2, a low beam LB is formed by the light emitted from the low beam lamp unit 10. In addition, a high beam portion HB that forms a high beam is formed by the light emitted from the high beam lamp unit 20, the high beam being formed by adding the high beam portion HB to the low beam LB. That is, the low beam LB and the high beam portion HB are combined to form a high beam. The low beam LB may mean a light distribution pattern of a low beam or light of a low beam, the high beam may mean a light distribution pattern of a high beam or light of a high beam, and the high beam portion HB may mean a light distribution pattern of a high beam portion or light of a high beam. The light distribution pattern means a shape of an image of light formed on a virtual vertical screen, for example, 25 m ahead of the host vehicle 100 and intensity distribution of light in the image.

The casing 30 includes a housing 31 and an outer cover 32. The housing 31 is formed in a box shape having an opening on the front side, and the outer cover 32 is fixed to the housing 31 so as to close the opening. In this way, the casing 30 has an accommodation space surrounded by the housing 31 and the outer cover 32, and the low beam lamp unit 10 and the high beam lamp unit 20 are accommodated in the accommodation space. The outer cover 32 transmits light emitted from the low beam lamp unit 10 and the high beam lamp unit 20.

The low beam lamp unit 10 emits the light of the low beam LB as described above, and is configured to change the light distribution pattern of the low beam LB of the light in the present embodiment. The low beam lamp unit 10 includes a low beam light source 11 that emits light forward and a projection lens 12 disposed in front of the low beam light source 11.

The high beam lamp unit 20 is configured to emit the light of the high beam portion HB as described above and change the light distribution pattern of the high beam portion HB of the light. The high beam lamp unit 20 includes a high beam light source 21 that emits light forward and a projection lens 22 disposed in front of the high beam light source 21.

The projection lens 12 adjusts a divergence angle of light incident on the projection lens 12 from the low beam light source 11 and emits the light, and the projection lens 22 adjusts a divergence angle of light incident on the projection lens 22 from the high beam light source 21 and emits the light. The light whose divergence angle is adjusted by the projection lenses 12 and 22 is emitted from the outer cover 32 ahead of the host vehicle 100.

In the present embodiment, the low beam light source 11 and the high beam light source 21 have substantially the same configuration. Therefore, the high beam light source 21 will be described. FIG. 3 is a schematic front view of the high beam light source 21 illustrated in FIG. 1. The high beam light source 21 of the present embodiment includes a plurality of light emitting elements 23 that emit light forward and a circuit board 24 on which the plurality of light emitting elements 23 is mounted. The light emitting elements 23 are disposed in a matrix and disposed in the vertical direction and the left-right direction. In the present embodiment, these light emitting elements 23 are, for example, micro light emitting diodes (LEDs), and in this case, the high beam light source 21 is a so-called micro LED array. The number of the light emitting elements 23 disposed in each of the left-right direction and the vertical direction is not particularly limited. Each light emitting element 23 is configured so that the amount of emitted light can be individually changed by the control unit 3.

The control unit 3 includes, for example, an integrated circuit such as a microcontroller, an integrated circuit (IC), a large-scale integrated circuit (LSI), or an application specific integrated circuit (ASIC), a numerical control (NC) device, and the like. In addition, in a case where the NC device is used, the control unit 3 may include a machine learning device or may not include a machine learning device. The control unit 3 is electrically connected to the ECU 150.

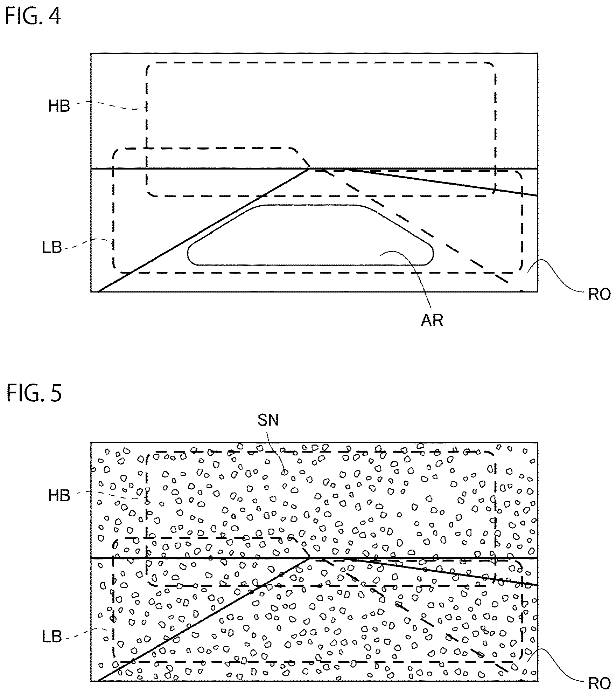

The road surface state detection device 110 is a device that detects a state of snow accumulation on a road surface to output road surface information. FIG. 4 is a diagram for describing detection of a state of a road surface. A road surface RO in the snow-accumulated state has a higher light reflectance than the road surface RO in the non-snow-accumulated state, and even in the case of snow accumulation, the road surface RO in a snow-accumulated state in which snow is compacted has a higher light reflectance than the road surface RO in a snow-accumulated state in which no snow is compacted. Therefore, the road surface state detection device 110 detects the state of snow accumulation on the road surface RO based on, for example, the state of reflection of light in a predetermined region AR on the road surface RO. Road surface state detection device 110 includes a light detection unit 111 and a determination unit 112 electrically connected to the light detection unit 111.

The light detection unit 111 includes, for example, a camera. Examples of the camera include a charged coupled device (CCD) camera and a complementary metal oxide semiconductor (CMOS) camera. In a case where the light detection unit 111 is a camera, for example, the light detection unit 111 captures an image of the region AR of the road surface RO irradiated with light of the low beam LB of the host vehicle 100 to output a signal related to the captured image to the determination unit 112.

For example, as in the control unit 3, the determination unit 112 includes an integrated circuit such as a microcontroller, an IC, an LSI, and an ASIC, an NC device, and the like, and outputs different signals depending on a signal related to an input image between a non-snow-accumulated state, a snow-accumulated state in which no snow is compacted, and a snow-accumulated state in which snow is compacted for the road surface RO. Specifically, the determination unit 112 detects the luminance of the region AR irradiated with the light of the low beam LB from the signal related to the input image, outputs a first signal as the road surface information in a case where the luminance is the first luminance or more, outputs a second signal as the road surface information in a case where the luminance is smaller than the first luminance and is the second luminance or more, and outputs a third signal as the road surface information in a case where the luminance is smaller than the second luminance. Note that, for easy understanding, the first signal may be referred to as a signal of a snow-accumulated state in which snow is compacted, the second signal may be referred to as a signal of a snow-accumulated state in which no snow is compacted, and the third signal may be referred to as a signal of a non-snow-accumulated state. The determination unit 112 may not output the signal in a case where the road surface RO is in the non-snow-accumulated state.

The determination unit 112 is electrically connected to the ECU 150, and these signals are input to the ECU 150. The signal input from the determination unit 112 to the ECU 150 is input from the ECU 150 to the control unit 3. Note that a signal may be directly input from the determination unit 112 to the control unit 3.

Note that the light detection unit 111 is not limited to a camera. For example, predetermined light may be emitted directly below the host vehicle 100, reflected light, from the road surface RO, of the light may be received by a light receiving element, and a signal related to intensity of the received light may be output. In this case, a photodiode can be used as the light receiving element of light. In this case, the determination unit 112 outputs different signals between the non-snow-accumulated state, the snow-accumulated state in which no snow is compacted, and the snow-accumulated state in which snow is compacted for the road surface RO according to the signal related to the intensity of light received by the light detection unit 111.

The snowfall detection device 120 is a device that detects a state of presence or absence of snowfall. FIG. 5 is a diagram for describing detection of a state of presence or absence of snowfall. In the snow-falling state, the snow particles SN reflect light applied to the air. Therefore, the snowfall detection device 120 detects the presence or absence of snowfall from the state of reflection of light applied to the front of the vehicle. The snowfall detection device 120 includes an image acquisition unit 121 and a determination unit 122 electrically connected to the image acquisition unit 121.

The image acquisition unit 121 includes, for example, the camera or the light detection and ranging (LiDAR) exemplified in the description of the light detection unit 111. In a case where the image acquisition unit 121 includes a camera, the image acquisition unit 121 captures, for example, a region irradiated with light of the high beam portion HB of the host vehicle 100 to output a signal related to the captured image to the determination unit 122. In a case where the image acquisition unit 121 is the LiDAR, for example, the image acquisition unit 121 scans the air in front of the host vehicle 100 with laser light, receives laser light returning by reflection, and outputs a signal related to an image to the determination unit 122 based on the received laser light.

The determination unit 122 includes, for example, an integrated circuit such as a microcontroller, an IC, an LSI, or an ASIC, an NC device, and the like, as in the control unit 3, to output different signals between the snow-falling state and the non-snow-falling state. Specifically, in a case where the image acquisition unit 121 is a camera, light reflected by the snow particles SN is captured by the camera. Therefore, for example, the determination unit 122 outputs a signal of the snow-falling state as the snowfall information in a case where a predetermined number or more of dotted regions with high-luminance are included from the signal related to the input image, and outputs a signal of the non-snow-falling state as the snowfall information in a case where the predetermined number or more of dotted regions with high-luminance are not included. In addition, in a case where the image acquisition unit 121 is the LiDAR, the laser light is reflected by the snow particles SN. Therefore, for example, the determination unit 122 outputs a signal of a snow-falling state as the snowfall information in a case where a predetermined number or more of dotted objects are included from the signal related to the input image, and outputs a signal of a non-snow-falling state as the snowfall information in a case where the predetermined number or more of dotted objects are not included from the signal related to the input image. Note that the determination unit 122 may include a machine learning device, and may output a signal of a snow-falling state or a non-snow-falling state as snowfall information by machine learning from a signal related to an input image. Note that the determination unit 122 may not output a signal in the non-snow-falling state.

The determination unit 122 is electrically connected to the ECU 150, and these signals are input to the ECU 150. The signal input from the determination unit 122 to the ECU 150 is input from the ECU 150 to the control unit 3. Note that a signal may be directly input from the determination unit 122 to the control unit 3.

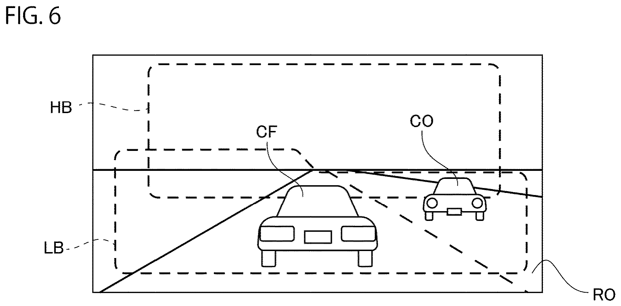

The another vehicle detection device 130 is a device that detects another vehicle located in front of the host vehicle 100 to output another vehicle information. FIG. 6 is a diagram for describing detection of another vehicle. As illustrated in FIG. 6, other vehicles include a preceding vehicle CF traveling in front of the host vehicle 100 together with the host vehicle 100, and an oncoming vehicle CO traveling in front of the host vehicle 100 opposite the traveling direction of the host vehicle 100. The another vehicle detection device 130 includes, for example, an acquisition unit 131 and a determination unit 132 electrically connected to the acquisition unit 131.

The acquisition unit 131 is, for example, an image acquisition unit including the camera exemplified in the description of the light detection unit 111 or a distance acquisition unit including a millimeter wave radar or the like. In a case where the acquisition unit 131 includes the LiDAR, the LiDAR can acquire an image of an object and a distance to the object, and thus the LiDER is an image acquisition unit and a distance acquisition unit. In a case where the acquisition unit 131 is an image acquisition unit including a camera, the acquisition unit 131 captures an image in front of the host vehicle 100 to output a signal related to the captured image to the determination unit 132. In a case where the acquisition unit 131 is a distance acquisition unit including a millimeter wave radar, the acquisition unit irradiates a region in front of the host vehicle 100 with a millimeter wave, receives a millimeter wave returning by reflection, and outputs a signal related to a distance to an object ahead to the determination unit 132 based on the received millimeter wave. In a case where the acquisition unit 131 is an image acquisition unit or a distance acquisition unit including the LiDAR, for example, the acquisition unit 131 scans a region in front of the host vehicle 100 with laser light, receives laser light returning by reflection, and outputs a signal related to an image or a signal related to a distance to an object ahead to the determination unit 132 based on the received laser light.

The determination unit 132 includes, for example, an integrated circuit such as a microcontroller, an IC, an LSI, and an ASIC, an NC device, and the like, as in the control unit 3, and in the present embodiment, outputs different signals between a state where another vehicle is not traveling ahead, a state where another vehicle is traveling ahead as the preceding vehicle CF, and a state where another vehicle is traveling ahead as the oncoming vehicle CO. Specifically, in a case where the acquisition unit 131 is an image acquisition unit including a camera, for example, the determination unit 132 outputs a signal in which the preceding vehicle CF is traveling in a case where a pair of red light spots having luminance higher than predetermined luminance exist at a predetermined interval in the left-right direction from a signal related to an input image, and outputs another vehicle information which is a signal in which the oncoming vehicle CO is traveling in a case where a pair of white light spots having luminance higher than predetermined luminance exist at a predetermined interval in the left-right direction, and outputs a signal in which another vehicle is not traveling in a case where the pair of light spots do not exist. The pair of red light spots is, for example, a tail light of the preceding vehicle CF, and the pair of white light spots is, for example, a headlight of the oncoming vehicle CO. In addition, in a case where the acquisition unit 131 is an image acquisition unit including a camera or a LiDAR, for example, the determination unit 132 detects the preceding vehicle CF or the oncoming vehicle CO by image recognition, outputs another vehicle information which is a signal in which the preceding vehicle CF is traveling in a case where the preceding vehicle CF travels, outputs a signal in which the oncoming vehicle CO is traveling in a case where the oncoming vehicle CO travels, and outputs a signal in which the another vehicle is not traveling in a case where the another vehicle is not detected. In addition, in a case where the acquisition unit 131 is a distance acquisition unit including the LiDAR or the millimeter wave radar, the determination unit 132 outputs another vehicle information that is a signal indicating that the preceding vehicle CF is traveling in a case where an object in front of the host vehicle 100 is moving in a state where a change in the distance from the host vehicle 100 is small, outputs another vehicle information that is a signal indicating that the oncoming vehicle CO is traveling in a case where a change amount in the distance between the host vehicle 100 and the object ahead is small with the speed faster than the traveling speed of the host vehicle 100, and outputs a signal indicating that another vehicle is not traveling in other cases. Note that the determination unit 132 may output a specific signal in a case where a state is changed from the state in which the oncoming vehicle CO travels to the state in which the vehicle does not travel. In a case where a state in which the oncoming vehicle CO is traveling is changed to a state in which the oncoming vehicle CO is not traveling, it can be regarded that the oncoming vehicle CO and the host vehicle pass each other. Therefore, this specific signal can be treated as a signal in a case where the oncoming vehicle CO and the host vehicle pass each other. Note that determination unit 132 may not output a signal when another vehicle is not traveling.

The determination unit 132 is electrically connected to the ECU 150, and these signals are input to the ECU 150. The signal input from the determination unit 132 to the ECU 150 is input from the ECU 150 to the control unit 3. Note that a signal may be directly input from the determination unit 132 to the control unit 3.

Next, an operation of the vehicle headlight 1 of the present embodiment will be described.

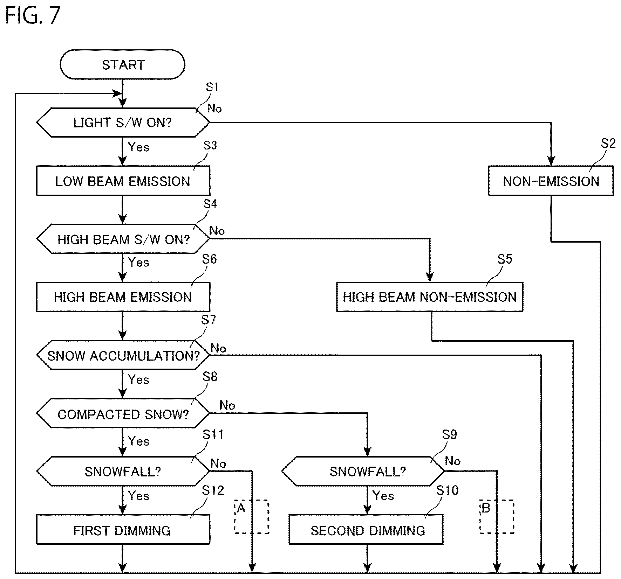

FIG. 7 is a flowchart illustrating the operation of the control unit 3 in the present embodiment. As illustrated in FIG. 7, steps S1 to S12 of the present embodiment are provided. Note that A and B indicated by broken lines in FIG. 7 will be described after the description of the third embodiment.

### (Step S1)

The step is a step of making the next step different according to whether an ON signal is input from a light switch (not illustrated). In the step, the control unit 3 advances the control flow to step S2 in a case where the ON signal is not input from the light switch, and advances the control flow to step S3 in a case where the ON signal is input. The ON signal from the light switch may be directly input to the control unit 3 or may be input via the ECU 150.

### (Step S2)

The step is a step of not emitting light from the lamp unit 2. In the step, the control unit 3 controls the low beam light source 11 of the low beam lamp unit 10 and the high beam light source 21 of the high beam lamp unit 20 so as not to emit light from the low beam lamp unit 10 and the high beam lamp unit 20. Note that, in a case where the control unit 3 performs control so as not to emit light from the low beam light source 11 or the high beam light source 21, as a result, it is sufficient that light is not emitted from the low beam light source 11 or the high beam light source 21, and a case where a control signal is not input from the control unit 3 to the low beam light source 11 or the high beam light source 21 is included. For example, in a case where light is not emitted from the low beam lamp unit 10 and the high beam lamp unit 20 when the process proceeds from step S1 to the step, the control unit 3 may maintain such a state. Therefore, in this case, the control unit 3 may not output any control signal. After the step, the control unit 3 returns the control flow to step S1.

### (Step S3)

The step is a step of emitting the light of the low beam LB from the low beam lamp unit 10. In the step, the control unit 3 controls the low beam light source 11 of the low beam lamp unit 10 to emit light from the low beam light source 11. In this way, the low beam light source 11 emits light to be a low beam LB. Note that, in a case where the light is emitted from the low beam lamp unit 10 at the time of proceeding from step S2 to the step, the control unit 3 may maintain this state. In this case, the control unit 3 may not output any control signal to the low beam lamp unit 10. In addition, in the step, the control unit 3 does not particularly control the high beam lamp unit 20. Therefore, the state of light emission from the high beam lamp unit 20 at the time of proceeding from step S2 to the step is maintained. After the step, the control unit 3 advances the control flow to step S4.

### (Step S4)

The step is a step of making the next step different according to whether an ON signal is input from a high beam switch (not illustrated). In the step, the control unit 3 advances the control flow to step S5 in a case where the ON signal is not input from the high beam switch, and advances the control flow to step S6 in a case where the ON signal of the high beam switch is input. Note that the ON signal from the high beam switch may be directly input to the control unit 3 or may be input via the ECU 150.

### (Step S5)

The step is a step of not emitting the light from the high beam lamp unit 20. In the step, the control unit 3 controls the high beam light source 21 of the high beam lamp unit 20 so as not to emit light from the high beam light source 21. Note that, in a case where light is not emitted from the high beam lamp unit 20 at the time of proceeding from step S4 to the step, the control unit 3 may maintain this state. In this case, the control unit 3 may not output any control signal to the high beam lamp unit 20. After the step, the control unit 3 returns the control flow to step S1.

### (Step S6)

The step is a step of emitting light from the high beam lamp unit 20. In the step, the control unit 3 controls the high beam light source 21 of the high beam lamp unit 20 to emit light to be the high beam portion HB from the high beam light source 21. In the step, since the light to be the low beam LB has already been emitted from the low beam lamp unit 10, the light of the high beam portion HB emitted from the high beam lamp unit 20 is added to the light of the low beam LB to form a high beam. In this way, in the step, the high beam light is emitted from the lamp unit 2. Note that, in a case where light is emitted from the high beam lamp unit 20 at the time of proceeding from step S4 to the step, the control unit 3 may maintain this state. In this case, the control unit 3 may not output any control signal to the high beam lamp unit 20. After the step, the control unit 3 advances the control flow to step S7.

### (Step S7)

The step is a step of making the next step different according to the signal related to the snow accumulation from the road surface state detection device 110. In the step, the control unit 3 returns the control flow to step S1 in a case where a signal of a non-snow-accumulated state is input from the road surface state detection device 110, and advances the control flow to step S8 in a case where a signal of a snow-accumulated state is input from the road surface state detection device 110. The signal of the snow-accumulated state may be a signal of a snow-accumulated state in which snow is compacted or a signal of a snow-accumulated state in which no snow is compacted. In addition, in a case where the road surface state detection device 110 does not output a signal in a case where the road surface RO is in the non-snow-accumulated state, in the step, in a case where there is no input of a signal from the road surface state detection device 110, the control unit 3 performs the same control as in a case where a signal in the non-snow-accumulated state is input from the road surface state detection device 110.

### (Step S8)

The step is a step of making the next step different according to the signal of the snow-accumulated state in which snow is compacted or the snow-accumulated state in which no snow is compacted from the road surface state detection device 110. In the step, the control unit 3 advances the control flow to step S9 in a case where a signal of a snow-accumulated state in which no snow is compacted is input from the road surface state detection device 110, and advances the control flow to step S11 in a case where a signal of a snow-accumulated state in which snow is compacted is input from the road surface state detection device 110.

### (Step S9)

The step is a step of making the next step different according to the signal from the snowfall detection device 120. In the step, the control unit 3 advances the control flow to step S10 in a case where the signal of the snow-falling state from the snowfall detection device 120 is input, and returns the control flow to step S1 in a case where the signal of the snow-falling state from the snowfall detection device 120 is not input. The case where the signal of the snow-falling state is not input from the snowfall detection device 120 includes a case where the signal of the non-snow-falling state is input from the snowfall detection device 120 to the control unit 3 and a case where the signal is not input from the snowfall detection device 120 to the control unit 3.

### (Step S10)

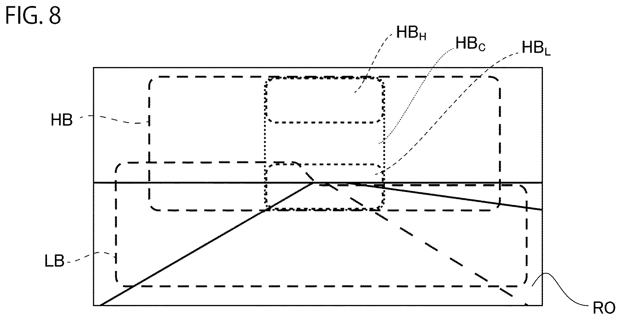

The step is a step of bringing the light emitted from the high beam lamp unit 20 into the second dimming state. FIG. 8 is a view illustrating a light distribution pattern in a dimming state. In the step, the control unit 3 brings the lamp unit 2 into the second dimming state. In the second dimming state, in the high beam portion HB illustrated in FIG. 8, the intensity of the light in the lower center region HB_{L} which is a lower region of the center region HB_{C} in the left-right direction and the intensity of light in the upper center region HB_{H} which is an upper region of the center region HB_{C} are reduced to a second intensity lower than the intensity of light in the lower center region HB_{L} and the upper center region HB_{H} in a case where the signal of the snow-falling state is not input to the control unit 3. In the step, the control unit 3 controls the high beam light source 21 of the high beam lamp unit 20 to reduce the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the second intensity. Note that the second intensity of light in the lower center region HB_{L} and the second intensity of light in the upper center region HB_{H} may not be the same. After the step, the control unit 3 returns the control flow to step S1.

### (Step S11)

As in step S9, the step is a step of making the next step different according to the signal from the snowfall detection device 120. In the step, the control unit 3 advances the control flow to step S12 in a case where the signal of the snow-falling state from the snowfall detection device 120 is input, and returns the control flow to step S1 in a case where the signal of the snow-falling state from the snowfall detection device 120 is not input.

### (Step S12)

The step is a step of bringing the light emitted from the high beam lamp unit 20 into the first dimming state. In the step, the control unit 3 brings the lamp unit 2 into the first dimming state. In the first dimming state, as in the second dimming state, the intensity of light in the lower center region HB_{L} and the upper center region HB_{H} illustrated in FIG. 8 is reduced to the first intensity having intensity lower than the intensity of light in the lower center region HB_{L} and the upper center region HB_{H} in a case where the signal of the snow-falling state is not input to the control unit 3. In the step, the control unit 3 controls the high beam light source 21 of the high beam lamp unit 20 to reduce the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the first intensity. Note that the first intensity of light in the lower center region HB_{L} and the first intensity of light in the upper center region HB_{H} may not be the same.

In the present embodiment, the intensity of light in the lower center region HB_{L} in the first dimming state is smaller than the intensity of light in the lower center region HB_{L} in the second dimming state. In addition, the intensity of light of the upper center region HB_{H} in the first dimming state may be smaller than the intensity of light of the upper center region HB_{H} in the second dimming state. After the step, the control unit 3 returns the control flow to step S1.

As described above, in the vehicle headlight 1 of the present embodiment, in a case where the road surface RO is in a snow-accumulated state in which snow is compacted and the state of the presence or absence of snowfall is a snow-falling state, the control unit 3 brings the lamp unit 2 into the first dimming state in which the intensity of light in the lower center region HB_{L} and the upper center region HB_{H} of the high beam portion HB is reduced. In a case where the road surface RO is in a snow-accumulated state in which snow is compacted, the road surface RO is likely to reflect light. In the case of the snow-falling state, when the light of the lower part of the high beam portion HB is reflected by the road surface RO in the snow-accumulated state in which snow is compacted, the reflected light is further reflected by the snow particles SN during the snowfall, and the light veil may be generated. However, in the vehicle headlight 1 of the present embodiment, as described above, the control unit 3 brings the lamp unit 2 into the first dimming state. That is, in the snow-falling state, by decreasing the intensity of light in the lower center region HB_{L}, the intensity of light of the high beam portion HB with which the road surface RO is irradiated can be decreased, and the intensity of light reflected by the road surface RO and further reflected by the snow particles SN during the snowfall can be reduced. As a result, occurrence of the light veil caused by light reflected by the road surface RO can be suppressed. In addition, in the snow-falling state, by reducing the intensity of light of the upper center region HB_{H}, the intensity of light of the high beam portion HB with which snow particles SN are directly irradiated during the snowfall can be reduced. As a result, the intensity of light reflected by the snow particles SN can be reduced, and the occurrence of the light veil can be suppressed. Therefore, according to the vehicle headlight 1 of the present embodiment, it is possible to suppress dazzling of the driver of the host vehicle 100 due to the occurrence of the light veil at the time of snowfall.

In addition, in the vehicle headlight 1 of the present embodiment, in a case where the road surface RO is in a snow-accumulated state in which no snow is compacted and the state of the presence or absence of snowfall is a snow-falling state, the control unit 3 brings the lamp unit 2 into the second dimming state in which the intensity of light in the lower center region HB_{L} and the upper center region HB_{H} is reduced. Even in a snow-accumulated state in which no snow is compacted such as new snow, the road surface RO reflects light. Therefore, even when no snow is compacted, in the snow-falling state, the light veil may be generated due to the light of the high beam portion HB reflected by the road surface RO. However, in the vehicle headlight 1, by bringing the lamp unit 2 into the second dimming state as described above, it is possible to suppress the occurrence of the light veil and to suppress dazzling of the driver of the host vehicle 100 even in a case of a snow-accumulated state in which no snow is compacted.

In addition, in the vehicle headlight 1 of the present embodiment, the intensity of light in the lower center region HB_{L} in the first dimming state is smaller than the intensity of light in the lower center region HB_{L} in the second dimming state. Since light tends to be scattered by snow particles near the snow surface without reaching the inside as the density of snow is higher, the road surface RO tends to have a higher reflectance in a snow-accumulated state in which snow is compacted than in a snow-accumulated state in which no snow is compacted. Therefore, according to the vehicle headlight 1 of the present embodiment, since the intensity of light in the lower center region HB_{L} in the first dimming state is smaller than the intensity of light in the lower center region HB_{L} in the second dimming state, it is possible to reduce the intensity of light reflected by the road surface RO in a snow-accumulated state in which snow is compacted, it is possible to reduce the difference in the degree of scattering of light by the snow particles SN between the first dimming state and the second dimming state, and it is possible to suppress the uncomfortable feeling of the driver of the host vehicle 100.

In the present embodiment, the host vehicle 100 may not include the another vehicle detection device 130, and a signal indicating that the preceding vehicle CF is traveling or a signal indicating that the oncoming vehicle CO is traveling may not be input to the control unit 3.

### (Second Embodiment)

Next, the second embodiment of the present invention will be described in detail. Note that the same or equivalent components as those of the first embodiment are denoted by the same reference numerals, and redundant description is omitted unless otherwise specified.

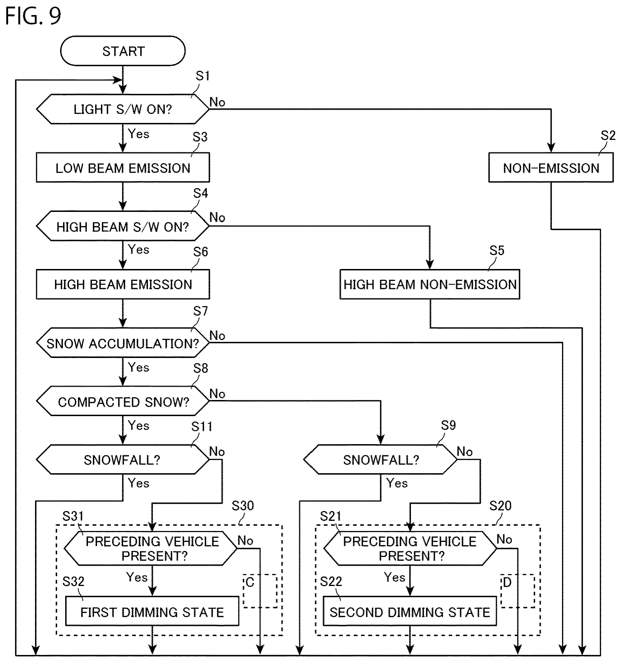

FIG. 9 is a flowchart illustrating the operation of the control unit 3 in the present embodiment. As illustrated in FIG. 9, the flowchart of the present embodiment is different from the flowchart of the first embodiment in that steps S10 and S12 are not included but steps S20 and S30 are included. Note that C and D indicated by broken lines in FIG. 9 will be described after the description of the third embodiment.

### (Step S9)

The step of the present embodiment is different from step S9 of the first embodiment in that the control unit 3 returns the control flow to step S1 in a case where the signal of the snow-falling state from the snowfall detection device 120 is input, and advances the control flow to step S20 in a case where the signal of the snow-falling state from the snowfall detection device 120 is not input. Step S20 includes steps S21 and S22.

### (Step S21)

The step is a step of making the next step different according to a signal from the another vehicle detection device 130. In the step, the control unit 3 advances the control flow to step S22 in a case where the signal indicating that the preceding vehicle CF is traveling is input from the another vehicle detection device 130, and returns the control flow to step S1 in a case where the signal indicating that the preceding vehicle CF is traveling is not input from the another vehicle detection device 130. Note that the case where the signal indicating that the preceding vehicle CF is traveling is not input includes a case where the signal indicating that the oncoming vehicle CO is traveling or the signal indicating that another vehicle is not traveling is input from the another vehicle detection device 130 to the control unit 3, and a case where the signal is not input from the another vehicle detection device 130 to the control unit 3.

### (Step S22)

The step is a step of bringing the lamp unit 2 into the second dimming state as in step S10. Therefore, the control unit 3 controls the high beam light source 21 of the high beam lamp unit 20 to reduce the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the second intensity. Also in the step, as in step S10, the second intensity of light in the lower center region HB_{L} and the second intensity of light in the upper center region HB_{H} may not be the same. After the step, the control unit 3 returns the control flow to step S1.

### (Step S11)

The step of the present embodiment is different from step S11 of the first embodiment in that the control unit 3 returns the control flow to step S1 in a case where the signal of the snow-falling state from the snowfall detection device 120 is input, and advances the control flow to step S30 in a case where the signal of the snow-falling state from the snowfall detection device 120 is not input. Step S30 includes steps S31 and S32.

### (Step S31)

The step is a step of making the next step different according to a signal from the another vehicle detection device 130 in the same manner as in step S21. In the step, the control unit 3 advances the control flow to step S32 in a case where the signal indicating that the preceding vehicle CF is traveling is input from the another vehicle detection device 130, and returns the control flow to step S1 in a case where the signal indicating that the preceding vehicle CF is traveling is not input from the another vehicle detection device 130. Note that the case where the signal indicating that the preceding vehicle CF is traveling is not input in the step is similar to the case where the signal indicating that the preceding vehicle CF is traveling is not input described in step S21.

### (Step S32)

As in step S12, the step is a step of bringing the lamp unit 2 into the first dimming state. Therefore, the control unit 3 controls the high beam light source 21 of the high beam lamp unit 20 to reduce the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the first intensity. Also in the step, as in step S12, the first intensity of light in the lower center region HB_{L} and the first intensity of light in the upper center region HB_{H} may not be the same. In the present embodiment, the intensity of light in the lower center region HB_{L} in the first dimming state is smaller than the intensity of light in the lower center region HB_{L} in the second dimming state, and the intensity of light of the upper center region HB_{H} in the first dimming state is smaller than the intensity of light of the upper center region HB_{H} in the second dimming state. After the step, the control unit 3 returns the control flow to step S1.

As described above, in the vehicle headlight 1 of the present embodiment, in a case where the road surface RO is in a snow-accumulated state in which snow is compacted, the state of the presence or absence of snowfall is a non-snow-falling state, and another vehicle is the preceding vehicle CF traveling in front of the host vehicle 100, the control unit 3 brings the lamp unit 2 into the first dimming state in which the intensity of light in the lower center region HB_{L} and the upper center region HB_{H} is reduced. In a case where the road surface RO is in a snow-accumulated state in which snow is compacted, when the vehicle travels on the road surface RO, snow remaining on the road surface RO in a snow-accumulated state in which snow is compacted tends to be whirled up by the vehicle. In addition, the road surface RO in a snow-accumulated state in which snow is compacted is likely to reflect light. For this reason, when the light of the lower part of the high beam portion HB is reflected by the road surface RO in a snow-accumulated state in which snow is compacted, the reflected light is further reflected by snow particles that another vehicle whirls up, and the light veil may be generated. In addition, when the snow particles whirled up by another vehicle are irradiated with the light of the high beam portion HB, the light veil may be generated by the light reflected by the snow particles. In the vehicle headlight 1 of the present embodiment, the intensity of light in the lower center region HB_{L} and the upper center region HB_{H} of the high beam portion HB is reduced in a case where the preceding vehicle CF is traveling. By reducing the intensity of light in the lower center region HB_{L}, the intensity of light of the high beam portion HB with which the road surface RO is irradiated can be reduced, and the intensity of light reflected by the road surface RO and further reflected by snow particles whirled up by the preceding vehicle CF can be reduced. As a result, occurrence of the light veil caused by light reflected by the road surface RO can be suppressed. In addition, by reducing the intensity of light in the upper center region HB_{H}, the intensity of light of the high beam portion HB directly with which snow particles whirled up by the preceding vehicle CF are irradiated can be reduced. As a result, the intensity of light reflected by the snow particles can be reduced, and the occurrence of the light veil can be suppressed. Therefore, according to the vehicle headlight 1 of the present embodiment, it is possible to suppress dazzling of the driver of the host vehicle 100 due to the occurrence of the light veil at the time of non-snowfall.

In addition, in the vehicle headlight 1 of the present embodiment, in a case where the road surface RO is in a snow-accumulated state in which no snow is compacted, the state of the presence or absence of snowfall is a non-snow-falling state, and another vehicle is the preceding vehicle CF traveling in front of the host vehicle 100, the control unit 3 brings the lamp unit 2 into the second dimming state in which the intensity of light in the lower center region HB_{L} and the upper center region HB_{H} is reduced. As described in the first embodiment, the road surface RO reflects light even in a snow-accumulated state in which no snow is compacted such as new snow. In addition, even when no snow is compacted, there is a case where snow on the surface layer is whirled up by the vehicle. Therefore, even when no snow is compacted, the light veil may be generated due to the light of the high beam portion HB. However, in the vehicle headlight 1, by bringing the lamp unit 2 into the second dimming state as described above, it is possible to suppress the occurrence of the light veil and to suppress dazzling of the driver of the host vehicle 100 even in a case of a snow-accumulated state in which no snow is compacted.

In addition, as described above, the reflectance tends to be higher in the snow-accumulated state in which snow is compacted than in the snow-accumulated state in which no snow is compacted. Therefore, in the vehicle headlight 1 of the present embodiment, the intensity of light in the lower center region HB_{L} in the first dimming state is smaller than the intensity of light in the lower center region HB_{L} in the second dimming state. Therefore, according to the vehicle headlight 1 of the present embodiment, it is possible to reduce the intensity of light with which the road surface RO is irradiated in a snow-accumulated state in which snow is compacted as compared with the case of a snow-accumulated state in which no snow is compacted, it is possible to reduce the difference in the degree of scattering of light due to snow particles between the first dimming state and the second dimming state, and it is possible to suppress the uncomfortable feeling of the driver of the host vehicle 100.

In addition, snow remaining on the road surface RO on which snow is compacted tends to be more likely to be whirled up by the vehicle than non-compacted snow. Therefore, in the vehicle headlight 1 of the present embodiment, the intensity of light of the upper center region HB_{H} in the first dimming state is smaller than the intensity of light of the upper center region HB_{H} in the second dimming state. Therefore, according to the vehicle headlight 1 of the present embodiment, it is possible to reduce the intensity of light with which the snow particles whirled up are irradiated in a snow-accumulated state in which snow is compacted as compared with the case of a snow-accumulated state in which no snow is compacted, it is possible to reduce the difference in the degree of scattering of light due to the snow particles between the first dimming state and the second dimming state, and it is possible to suppress the uncomfortable feeling of the driver of the host vehicle 100.

### (Third Embodiment)

Next, the third embodiment of the present invention will be described in detail. Note that the same or equivalent components as those of the first embodiment are denoted by the same reference numerals, and redundant description is omitted unless otherwise specified.

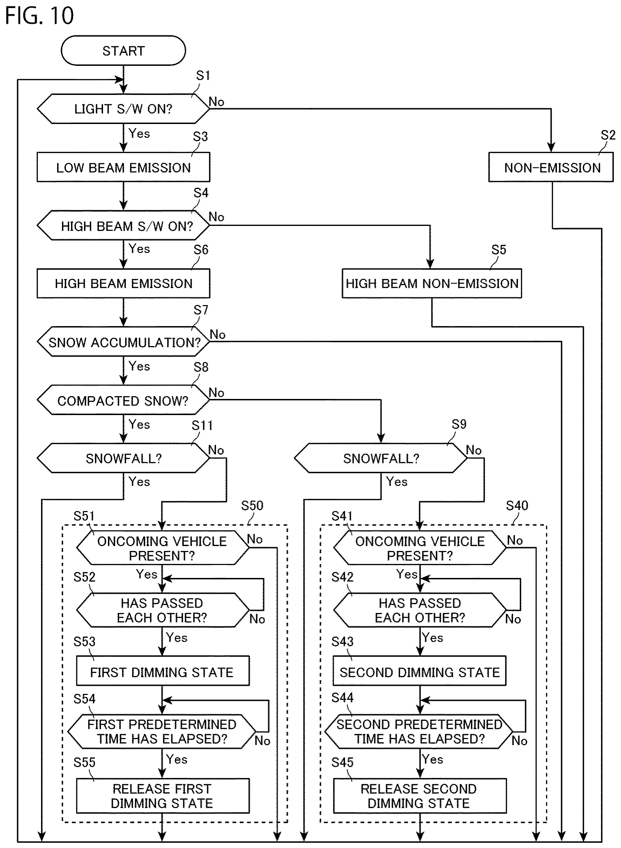

FIG. 10 is a flowchart illustrating the operation of the control unit 3 in the present embodiment. As illustrated in FIG. 10, the flowchart of the present embodiment is different from the flowchart of the first embodiment in that steps S10 and S12 are not included but steps S40 and S50 are included.

### (Step S9)

The step of the present embodiment is different from step S9 of the first embodiment in that the control unit 3 returns the control flow to step S1 in a case where the signal of the snow-falling state from the snowfall detection device 120 is input, and advances the control flow to step S40 in a case where the signal of the snow-falling state from the snowfall detection device 120 is not input. Step S40 includes steps S41 to S45.

### (Step S41)

The step is a step of making the next step different according to a signal from the another vehicle detection device 130. In the step, the control unit 3 advances the control flow to step S42 in a case where a signal indicating traveling of the oncoming vehicle CO from the another vehicle detection device 130 is input, and returns the control flow to step S1 in a case where a signal indicating traveling of the oncoming vehicle CO from the another vehicle detection device 130 is not input. Note that the case where the signal indicating that the oncoming vehicle CO is traveling is not input includes a case where a signal indicating that the preceding vehicle CF is traveling or a signal indicating that another vehicle is not traveling is input from the another vehicle detection device 130 to the control unit 3, and a case where a signal is not input from the another vehicle detection device 130 to the control unit 3.

### (Step S42)

The step is a step of making whether to proceed to the next step different according to whether the oncoming vehicle CO and the host vehicle pass each other. At the time when the process proceeds from step S41 to the step, a signal indicating that the oncoming vehicle CO is traveling is input from the another vehicle detection device 130. As long as this signal continues to be input to the control unit 3, the oncoming vehicle CO and the host vehicle do not pass each other. Therefore, the control unit 3 repeats the step as long as this signal continues to be input. In a case where this signal is no longer input to the control unit 3, the oncoming vehicle CO and the host vehicle have passed each other. Therefore, in a case where this signal is no longer input to the control unit 3, the control unit 3 advances the control flow to step S43. Note that, in a case where a specific signal that can be treated as a signal in a case where the oncoming vehicle CO and the host vehicle pass each other is input from the another vehicle detection device 130, the control unit 3 repeats the step unless the specific signal is input, and advances the process to step S43 in a case where the specific signal is input.

### (Step S43)

The step is a step of bringing the lamp unit 2 into the second dimming state as in step S10. Therefore, the control unit 3 controls the high beam light source 21 of the high beam lamp unit 20 to reduce the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the second intensity. Also in the step, as in step S10, the second intensity of light in the lower center region HB_{L} and the second intensity of light in the upper center region HB_{H} may not be the same. After the step, the control unit 3 advances the control flow to step S44.

### (Step S44)

The step is a step of making whether to proceed to the next step different according to the period after the oncoming vehicle CO and the host vehicle pass each other. In the present embodiment, the control unit 3 measures, with the internal clock, the time from when the signal indicating that the oncoming vehicle CO is traveling is no longer input from the another vehicle detection device 130 to the control unit 3. The period after the signal indicating that the oncoming vehicle CO is traveling is no longer input can be regarded as a period after the oncoming vehicle CO and the host vehicle pass each other. Therefore, the control unit 3 repeats the step in a case where the second predetermined period has not elapsed since the signal indicating that the oncoming vehicle CO is traveling is no longer input, and advances the control flow to step S45 in a case where the second predetermined period has elapsed. Note that, in a case where a specific signal that can be treated as a signal in a case where the oncoming vehicle CO and the host vehicle pass each other is input from the another vehicle detection device 130, the control unit 3 measures a time from when the specific signal is input, repeats the step in a case where the second predetermined period has not elapsed after the specific signal is input, and advances the control flow to step S45 in a case where the second predetermined period has elapsed. The second predetermined period is, for example, 5 seconds.

### (Step S45)

The step is a step of releasing the second dimming state of the lamp unit 2. Therefore, the control unit 3 controls the high beam light source 21 of the high beam lamp unit 20 to increase the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the same intensity as the intensity before step S43. After the step, the control unit 3 returns the control flow to step S1.

### (Step S11)

The step of the present embodiment is different from step S11 of the first embodiment in that the control unit 3 returns the control flow to step S1 in a case where the signal of the snow-falling state from the snowfall detection device 120 is input, and advances the control flow to step S50 in a case where the signal of the snow-falling state from the snowfall detection device 120 is not input. Step S50 includes steps S51 to S55.

### (Step S51)

As in step S41, the step is a step of making the next step different according to a signal from the another vehicle detection device 130. In the step, the control unit 3 advances the control flow to step S52 in a case where a signal indicating traveling of the oncoming vehicle CO from the another vehicle detection device 130 is input, and returns the control flow to step S1 in a case where a signal indicating traveling of the oncoming vehicle CO from the another vehicle detection device 130 is not input. Note that the case where the signal indicating that the oncoming vehicle CO is traveling is not input is similar to the case where the signal indicating that the oncoming vehicle CO is traveling is not input described in step S41.

### (Step S52)

As in step S42, the step is a step of making whether to proceed to the next step different according to whether the oncoming vehicle CO and the host vehicle pass each other. Also in the step, the control unit 3 repeats the step as long as the signal indicating that the oncoming vehicle CO is traveling continues to be input from the another vehicle detection device 130, and advances the control flow to step S53 in a case where this signal is no longer input to the control unit 3. In a case where a specific signal that can be treated as a signal in a case where the oncoming vehicle CO and the host vehicle pass each other is input from the another vehicle detection device 130, the control unit 3 repeats the step unless the specific signal is input, and advances the control flow to step S53 in a case where the specific signal is input.

### (Step S53)

As in step S12, the step is a step of bringing the lamp unit 2 into the first dimming state. Therefore, the control unit 3 controls the high beam light source 21 of the high beam lamp unit 20 to reduce the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the first intensity. Also in the step, as in step S12, the first intensity of light in the lower center region HB_{L} and the first intensity of light in the upper center region HB_{H} may not be the same. In the present embodiment, the intensity of light in the lower center region HB_{L} in the first dimming state is smaller than the intensity of light in the lower center region HB_{L} in the second dimming state, and the intensity of light of the upper center region HB_{H} in the first dimming state is smaller than the intensity of light of the upper center region HB_{H} in the second dimming state. After the step, the control unit 3 advances the control flow to step S54.

### (Step S54)

As in step S44, the step is a step of making whether to proceed to the next step different according to the period after the oncoming vehicle CO and the host vehicle pass each other. In the step, the control unit 3 repeats the step in a case where the first predetermined period has not elapsed since the signal indicating that the oncoming vehicle CO is traveling is no longer input, and advances the control flow to step S55 in a case where the first predetermined period has elapsed. Note that, in a case where a specific signal that can be treated as a signal in a case where the oncoming vehicle CO and the host vehicle pass each other is input from the another vehicle detection device 130, the control unit 3 measures a time from when the specific signal is input, repeats the step in a case where the first predetermined period has not elapsed since the specific signal is input, and advances the control flow to step S55 in a case where the first predetermined period has elapsed. In the present embodiment, the first predetermined period is longer than the second predetermined period, and is, for example, 10 seconds.

### (Step S55)

The step is a step of releasing the first dimming state of the lamp unit 2. Therefore, the control unit 3 controls the high beam light source 21 of the high beam lamp unit 20 to increase the intensity of light emitted from the light emitting element 23 that mainly emits light to be the light distribution pattern of the lower center region HB_{L} and the light emitting element 23 that mainly emits light to be the light distribution pattern of the upper center region HB_{H} so that the intensity of light in the lower center region HB_{L} and the upper center region HB_{H} is the same intensity as the intensity before step S53. After the step, the control unit 3 returns the control flow to step S1.

As described above, in the vehicle headlight 1 of the present embodiment, in a case where the road surface RO is in a snow-accumulated state in which snow is compacted, the state of the presence or absence of snowfall is a non-snow-falling state, and another vehicle is an oncoming vehicle CO, the control unit 3 brings the lamp unit 2 into the first dimming state in which the intensity of light in the lower center region HB_{L} and the upper center region HB_{H} is reduced for a first predetermined period after the oncoming vehicle CO and the host vehicle pass each other. As described in the second embodiment, when the light of the lower part of the high beam portion HB is reflected by the road surface RO on which snow is compacted, the reflected light is further reflected by the snow whirled up by another vehicle, and the light veil may be generated, and when the snow whirled up by another vehicle is irradiated with the light of the high beam portion HB, the light veil may be generated by the light reflected by the snow. In a case where the another vehicle is the oncoming vehicle CO, snow continues to be whirled up for a while after the oncoming vehicle CO and the host vehicle pass each other. In the vehicle headlight 1 of the present embodiment, the intensity of light in the lower center region HB_{L} and the upper center region HB_{H} of the high beam portion HB is reduced for a first predetermined period after the oncoming vehicle CO and the host vehicle pass each other. That is, by reducing the intensity of light in the lower center region HB_{L} for the first predetermined period, the intensity of light of the high beam portion HB with which the road surface RO is irradiated can be reduced, and the intensity of light reflected by the road surface RO and reflected by the snow particles further whirled up by the oncoming vehicle CO can be reduced. As a result, occurrence of the light veil caused by light reflected by the road surface RO can be suppressed. In addition, by reducing the intensity of light of the upper center region HB_{H} for the first predetermined period, the intensity of light of the high beam portion HB with which the snow particles whirled up by the oncoming vehicle CO are directly irradiated can be reduced. As a result, the intensity of light reflected by the snow particles SN can be reduced, and the occurrence of the light veil can be suppressed. Therefore, according to the vehicle headlight 1 of the present embodiment, it is possible to suppress dazzling of the driver of the host vehicle 100 due to the occurrence of the light veil at the time of non-snowfall.

In addition, in the vehicle headlight 1 of the present embodiment, the intensity of light in the lower center region HB_{L} in the first dimming state is smaller than the intensity of light in the lower center region HB_{L} in the second dimming state. Therefore, according to the vehicle headlight 1 of the present embodiment, it is possible to reduce the intensity of light with which the road surface RO is irradiated in the snow-accumulated state in which snow is compacted having a high reflectance, compared with in a snow-accumulated state in which no snow is compacted, it is possible to reduce the difference in the degree of scattering of light due to snow particles between the first dimming state and the second dimming state, and it is possible to suppress the uncomfortable feeling of the driver of the host vehicle 100.

In addition, in the vehicle headlight 1 of the present embodiment, the intensity of light of the upper center region HB_{H} in the first dimming state is smaller than the intensity of light of the upper center region HB_{H} in the second dimming state. Therefore, according to the vehicle headlight 1 of the present embodiment, in the case of a snow-accumulated state in which snow is compacted in which snow is likely to be whirled up, compared with the case of a snow-accumulated state in which no snow is compacted, it is possible to reduce the intensity of light with which snow particles whirled up are irradiated, it is possible to reduce the intensity of light reflected by the snow particles whirled up, it is possible to reduce the difference in the degree of scattering of light by the snow particles between the first dimming state and the second dimming state, and it is possible to suppress the uncomfortable feeling of the driver of the host vehicle 100.

In the vehicle headlight 1 of the present embodiment, the first predetermined period is longer than the second predetermined period. The snow remaining on the road surface RO on which snow is compacted tends to be more likely to be whirled up by the vehicle than the snow of the non-compacted snow, and even when the snow whirled up falls on the road surface RO on which snow is compacted, the snow tends to be whirled up again, and the period during which snow is whirled up tends to be longer than that of the snow-accumulated state in which no snow is compacted. Therefore, since the first predetermined period is longer than the second predetermined period, it is possible to further suppress dazzling after the oncoming vehicle CO and the host vehicle pass each other.

Although the present invention is described by taking the above-described embodiment as an example, the present invention is not limited thereto.

For example, step S30 of the second embodiment may be inserted at the position A of the flowchart illustrated in FIG. 7 of the first embodiment. In this case, in a case where the road surface RO is in a snow-accumulated state in which snow is compacted, the control unit 3 brings the lamp unit 2 into the first dimming state in a case where the state of the presence or absence of snowfall is a snow-falling state, and in a case where the state of the presence or absence of snowfall is a non-snow-falling state and another vehicle is a preceding vehicle CF traveling in front of the host vehicle 100. Step S20 of the second embodiment may be inserted at the position of B of FIG. 7 of the first embodiment. In this case, in a case where the road surface RO is in a snow-accumulated state in which no snow is compacted, the control unit 3 brings the lamp unit 2 into the second dimming state in a case where the state of the presence or absence of snowfall is a snow-falling state, and in a case where the state of the presence or absence of snowfall is a non-snow-falling state and another vehicle is the preceding vehicle CF traveling in front of the host vehicle 100. By combining the first embodiment and the second embodiment in this manner, it is possible to suppress the occurrence of the light veil due to the snowfall or the snow particles whirled up by the preceding vehicle CF in a case where the road surface RO is in a snow-accumulated state in which snow is compacted or in a snow-accumulated state in which no snow is compacted.

Step S50 of the third embodiment may be inserted at the position A of the flowchart illustrated in FIG. 7 of the first embodiment. In this case, in a case where the road surface RO is in a snow-accumulated state in which snow is compacted, the control unit 3 brings the lamp unit 2 into the first dimming state in a case where the state of the presence or absence of snowfall is a snow-falling state, and brings the lamp unit 2 into the first dimming state for a first predetermined period after the oncoming vehicle CO and the host vehicle pass each other in a case where the state of the presence or absence of snowfall is a non-snow-falling state and another vehicle is an oncoming vehicle CO. Step S40 of the third embodiment may be inserted at the position of B of FIG. 7 of the first embodiment. In this case, in a case where the road surface RO is in a snow-accumulated state in which no snow is compacted, the control unit 3 brings the lamp unit 2 into the second dimming state in a case where the state of the presence or absence of snowfall is a snow-falling state, and brings the lamp unit 2 into the second dimming state for a second predetermined period after the oncoming vehicle CO and the host vehicle pass each other in a case where the state of the presence or absence of snowfall is a non-snow-falling state and another vehicle is the oncoming vehicle CO. By combining the first embodiment and the third embodiment in this manner, it is possible to suppress the occurrence of the light veil due to the snowfall or the snow particles whirled up by the oncoming vehicle CO in a case where the road surface RO is in a snow-accumulated state in which snow is compacted or in a snow-accumulated state in which no snow is compacted.

Step S50 of the third embodiment may be inserted at the position C of the flowchart illustrated in FIG. 9 of the second embodiment. In this case, in a case where the road surface RO is in a snow-accumulated state in which snow is compacted and the state of the presence or absence of snowfall is a non-snow-falling state, the control unit 3 brings the lamp unit 2 into the first dimming state in a case where another vehicle is a preceding vehicle CF traveling in front of the host vehicle 100, and brings the lamp unit 2 into the first dimming state for a first predetermined period after the oncoming vehicle CO and the host vehicle pass each other in a case where another vehicle is an oncoming vehicle CO. Step S40 of the third embodiment may be inserted into the position D of FIG. 9 of the second embodiment. In this case, in a case where the road surface RO is in a snow-accumulated state in which no snow is compacted, and the state of the presence or absence of snowfall is a non-snow-falling state, the control unit 3 brings the lamp unit 2 into the second dimming state in a case where another vehicle is a preceding vehicle CF traveling in front of the host vehicle 100, and brings the lamp unit 2 into the second dimming state for a second predetermined period after the oncoming vehicle CO and the host vehicle pass each other in a case where another vehicle is an oncoming vehicle CO. By combining the second embodiment and the third embodiment in this manner, it is possible to suppress the occurrence of the light veil due to snow particles whirled up by the preceding vehicle CF or the oncoming vehicle CO in a case where the road surface RO is in a snow-accumulated state in which snow is compacted, or in case where the road surface RO is in a snow-accumulated state in which no snow is compacted and a non-snow-falling state.

As described above, in a case where step S30 of the second embodiment is inserted at the position A in FIG. 7 of the first embodiment, step S50 of the third embodiment may be inserted at the position C in step S30. As described above, in a case where step S20 of the second embodiment is inserted at the position of B of FIG. 7 of the first embodiment, step S40 of the third embodiment may be inserted at the position of D of step S20.

In the above embodiment, in a case where the road surface RO is in a snow-accumulated state in which no snow is compacted, the control unit 3 brings the lamp unit 2 into the second dimming state under a predetermined condition. However, in a case where the road surface RO is in a snow-accumulated state in which no snow is compacted, the control unit 3 may not bring the lamp unit 2 into the second dimming state under the predetermined condition.

In the above embodiment, the control unit 3 decreases the intensity of light in the lower center region HB_{L} and the upper center region HB_{H} in the first dimming state and the second dimming state as illustrated in FIG. 8. In FIG. 8, there is a region where the intensity of light does not change between the lower center region HB_{L} and the upper center region HB_{H}. However, the present invention is not limited thereto. For example, in the first modification, the control unit 3 decreases the intensity of light from the lower center region HB_{L} to the upper center region HB_{H} in the first dimming state and the second dimming state of FIG. 8. In this case, the intensity of light in the entire region HB_{C} at the center in the left-right direction in the high beam portion HB is reduced, the occurrence of the light veil can be further suppressed, and dazzling of the driver of the host vehicle 100 can be further suppressed. Note that the control unit 3 may reduce the intensity of light in the lower center region HB_{L} and the upper center region HB_{H} in the second dimming state, and may reduce the intensity of light from the lower center region HB_{L} to the upper center region HB_{H} in the first dimming state. The second dimming state includes a snow-accumulated state in which no snow is compacted, and the first dimming state includes a snow-accumulated state in which snow is compacted having a high light reflectance on the road surface RO, compared with that in the snow-accumulated state in which no snow is compacted. For this reason, in a state where the reflectance of light is high on the road surface RO, it is possible to further suppress dazzling of the driver of the host vehicle 100 by widening the region where light is further reduced.

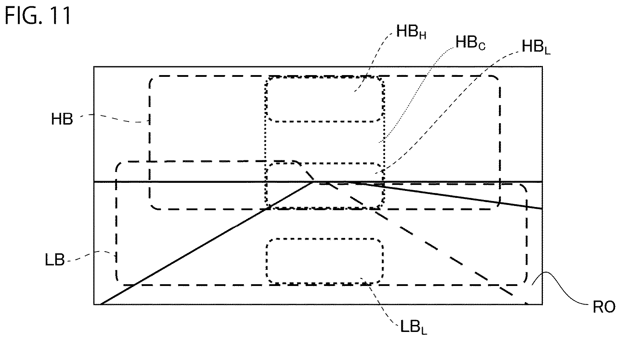

In the above embodiment, in the high beam light source 21 of the present embodiment, the plurality of light emitting elements 23 is disposed in each of the left-right direction and the vertical direction. However, as in the first modification, in a case where the high beam portion HB in the first dimming state and the second dimming state is set to the light distribution pattern in FIG. 11, the plurality of light emitting elements 23 of the high beam light source 21 may be disposed in the left-right direction but may not be disposed in the vertical direction.

In the above embodiment, the control unit 3 decreases the intensity of light in the lower center region HB_{L} and the upper center region HB_{H} in the high beam portion HB and does not change the low beam LB as illustrated in FIG. 8 in the first dimming state and the second dimming state. However, the present invention is not limited thereto. FIG. 11 is a view illustrating the second modification of the light distribution pattern in the dimming state. As illustrated in FIG. 11, the control unit 3 may reduce the intensity of light in a lower center region LB_{L} of the low beam LB in the left-right direction in the first dimming state and the second dimming state. In this case, reflection of light in the region LB_{L} of the low beam LB is suppressed, the occurrence of the light veil can be further suppressed, and dazzling of the driver of the host vehicle 100 can be further suppressed. Note that as illustrated in FIG. 8, the control unit 3 may decrease the intensity of light of the lower center region HB_{L} and the upper center region HB_{H} in the second dimming state, and may decrease the intensity of light of the lower center region HB_{L}, the upper center region HB_{H}, and the region LB_{L} in the first dimming state. For this reason, in the snow-accumulated state in which snow is compacted in which the road surface RO has a high light reflectance, compared with that in the snow-accumulated state in which no snow is compacted, it is possible to further suppress dazzling of the driver of the host vehicle 100 by widening the region where light is further reduced.

Note that the low beam lamp unit 10 may have a configuration in which the light distribution pattern of the emitted light cannot be changed except in a case where the low beam LB is changed in the first dimming state and the second dimming state as in the second modification. In this case, the low beam light source 11 may include, for example, one light emitting element.

In the above embodiment, the example is described in which the intensity of light of the lower center region HB_{L} and the upper center region HB_{H} in the first dimming state are smaller than the intensity of light of the lower center region HB_{L} and the upper center region HB_{H} in the second dimming state. However, the intensity of light in the lower center region HB_{L} in the first dimming state may not be smaller than the intensity of light in the lower center region HB_{L} in the second dimming state, and the intensity of light of the upper center region HB_{H} in the first dimming state may not be smaller than the intensity of light of the upper center region HB_{H} in the second dimming state. For example, the intensity of light in the lower center region HB_{L} in the first dimming state may be equal to the intensity of light in the lower center region HB_{L} in the second dimming state, and the intensity of light of the upper center region HB_{H} in the first dimming state may be equal to the intensity of light of the upper center region HB_{H} in the second dimming state.

In the above embodiment, the example in which the first predetermined period is longer than the second predetermined period is described. However, the first predetermined period may not be longer than the second predetermined period. For example, the first predetermined period and the second predetermined period may have the same length.

In addition, the road surface state detection device 110 is not limited to the example of the above embodiment as long as it can detect the snow-accumulated state in which snow is compacted and the snow-accumulated state in which no snow is compacted.

The snowfall detection device 120 is not limited to the example of the above embodiment as long as it can detect the snow-falling state. For example, the snowfall detection device 120 may include a detector that detects the operation of the wiper and a thermometer. In this case, the snowfall detection device 120 may output the signal of the snow-falling state, for example, in a case where the detector detects that the wiper is operating in an environment where the outside temperature is equal to or lower than a predetermined temperature such as below freezing.

The another vehicle detection device 130 is not limited to the example of the above embodiment as long as it can detect the preceding vehicle CF and the oncoming vehicle CO.

According to the present invention, a vehicle headlight capable of suppressing dazzling of a driver of the host vehicle 100 due to the occurrence of the light veil is provided, and can be used in the field of automobiles and the like.

## Claims

1. A vehicle headlight comprising:
a lamp unit including a low beam lamp unit that emits light of a low beam and a high beam lamp unit that emits light of a high beam portion that forms a high beam, the high beam being formed by adding the light of the high beam portion to the low beam; and
a control unit that receives road surface information output by a road surface state detection device that detects a state of a road surface and snowfall information output by a snowfall detection device that detects a state of presence or absence of snowfall, and controls the lamp unit, wherein
in a case where the road surface is in a snow-accumulated state in which snow is compacted and the state of the presence or absence of snowfall is a snow-falling state, the control unit brings the lamp unit into a first dimming state in which intensity of light in a lower center region that is a lower region of a center region of the high beam portion in a left-right direction and an upper center region that is an upper region of the center region is reduced.

2. The vehicle headlight according to claim 1, wherein
in a case where the road surface is in a snow-accumulated state in which no snow is compacted and the state of the presence or absence of snowfall is a snow-falling state, the control unit brings the lamp unit into a second dimming state in which intensity of light in the lower center region and the upper center region is reduced.

3. The vehicle headlight according to claim 2, wherein
intensity of light in the lower center region in the first dimming state is smaller than intensity of light in the lower center region in the second dimming state.

4. The vehicle headlight according to claim 1, wherein
the control unit further receives another vehicle information output by another vehicle detection device that detects another vehicle, and wherein
the control unit brings the lamp unit into the first dimming state in a case where the road surface is in a snow-accumulated state in which snow is compacted, the state of the presence or absence of snowfall is a non-snow-falling state, and the another vehicle is a preceding vehicle traveling in front of a host vehicle.

5. The vehicle headlight according to claim 4, wherein
in a case where the road surface is in a snow-accumulated state in which no snow is compacted, the state of the presence or absence of snowfall is a non-snow-falling state, and the another vehicle is a preceding vehicle traveling in front of a host vehicle, the control unit brings the lamp unit into a second dimming state in which intensity of light in the lower center region and the upper center region is reduced.

6. The vehicle headlight according to claim 5, wherein
intensity of light in the lower center region in the first dimming state is smaller than intensity of light in the lower center region in the second dimming state.

7. The vehicle headlight according to claim 5, wherein
intensity of light of the upper center region in the first dimming state is smaller than intensity of light of the upper center region in the second dimming state.

8. The vehicle headlight according to claim 1, wherein
the control unit further receives another vehicle information output by another vehicle detection device that detects another vehicle, and wherein
in a case where the road surface is in a snow-accumulated state in which snow is compacted, the state of the presence or absence of snowfall is a non-snow-falling state, and the another vehicle is an oncoming vehicle, the control unit brings the lamp unit into the first dimming state for a first predetermined period after the oncoming vehicle and a host vehicle pass each other.

9. The vehicle headlight according to claim 8, wherein
in a case where the road surface is in a snow-accumulated state in which no snow is compacted, the state of the presence or absence of snowfall is a non-snow-falling state, and the another vehicle is an oncoming vehicle, the control unit brings the lamp unit into a second dimming state in which intensity of light in the lower center region and the upper center region is reduced for a second predetermined period after the oncoming vehicle and the host vehicle pass each other.

10. The vehicle headlight according to claim 9, wherein
intensity of light in the lower center region in the first dimming state is smaller than intensity of light in the lower center region in the second dimming state.

11. The vehicle headlight according to claim 9, wherein
intensity of light of the upper center region in the first dimming state is smaller than intensity of light of the upper center region in the second dimming state.

12. The vehicle headlight according to claim 9, wherein
the first predetermined period is longer than the second predetermined period.

13. A vehicle headlight comprising:
a lamp unit including a low beam lamp unit that emits light of a low beam, and a high beam lamp unit that emits light with a light distribution pattern of a high beam portion that forms a high beam, the high beam being formed by adding the light of the high beam portion to the low beam; and
a control unit that receives road surface information output by a road surface state detection device that detects a state of a road surface, snowfall information output by a snowfall detection device that detects a state of presence or absence of snowfall, and another vehicle information output by another vehicle detection device that detects another vehicle, and controls the lamp unit, wherein
in a case where the road surface is in a snow-accumulated state in which snow is compacted, the state of the presence or absence of snowfall is a non-snow-falling state, and the another vehicle is a preceding vehicle traveling in front of a host vehicle, the control unit brings the lamp unit into a first dimming state in which intensity of light in a lower center region that is a lower region of a center region of the high beam portion in a left-right direction and an upper center region that is an upper region of the center region is reduced.

14. The vehicle headlight according to claim 13, wherein
in a case where the road surface is in a snow-accumulated state in which no snow is compacted, the state of the presence or absence of snowfall is a non-snow-falling state, and the another vehicle is a preceding vehicle traveling in front of a host vehicle, the control unit brings the lamp unit into a second dimming state in which intensity of light in the lower center region and the upper center region is reduced.

15. The vehicle headlight according to claim 14, wherein
intensity of light in the lower center region in the first dimming state is smaller than intensity of light in the lower center region in the second dimming state.

16. The vehicle headlight according to claim 14, wherein
intensity of light of the upper center region in the first dimming state is smaller than intensity of light of the upper center region in the second dimming state.

17. A vehicle headlight comprising:
a lamp unit including a low beam lamp unit that emits light of a low beam, and a high beam lamp unit that emits light of a high beam portion that forms a high beam, the high beam being formed by adding the light of the high beam portion to the low beam; and
a control unit that receives road surface information output by a road surface state detection device that detects a state of a road surface, snowfall information output by a snowfall detection device that detects a state of presence or absence of snowfall, and another vehicle information output by another vehicle detection device that detects another vehicle, and controls the lamp unit, wherein
in a case where the road surface is in a snow-accumulated state in which snow is compacted, the state of the presence or absence of snowfall is a non-snow-falling state, and the another vehicle is an oncoming vehicle, the control unit brings the lamp unit into a first dimming state in which intensity of light in a lower center region that is a lower region of a center region of the high beam portion in a left-right direction and an upper center region that is an upper region of the center region is reduced for a first predetermined period after the oncoming vehicle and a host vehicle have passed each other.

18. The vehicle headlight according to claim 17, wherein
in a case where the road surface is in a snow-accumulated state in which no snow is compacted, the state of the presence or absence of snowfall is a non-snow-falling state, and the another vehicle is an oncoming vehicle, the control unit brings the lamp unit into a second dimming state in which intensity of light in the lower center region and the upper center region is reduced for a second predetermined period after the oncoming vehicle and the host vehicle pass each other.

19. The vehicle headlight according to claim 18, wherein
intensity of light in the lower center region in the first dimming state is smaller than intensity of light in the lower center region in the second dimming state.

20. The vehicle headlight according to claim 18, wherein
intensity of light of the upper center region in the first dimming state is smaller than intensity of light of the upper center region in the second dimming state.

21. The vehicle headlight according to claim 18, wherein
the first predetermined period is longer than the second predetermined period.

22. The vehicle headlight according to any one of claims 1 to 21, wherein
the control unit reduces intensity of light from the lower center region to the upper center region in the first dimming state.

23. The vehicle headlight according to any one of claims 1 to 21, wherein
the control unit reduces intensity of light in a lower center region of the low beam in the left-right direction in the first dimming state.
